# EUROPÄISCHE PATENTANMELDUNG

(11) **EP 1 380 697 A2**
(43) Veröffentlichungstag der Anmeldung: **14.01.2004**
(21) Anmeldenummer: 03015707.7
(22) Anmeldetag: 09.07.2003
(51) Int. Cl.: E04B 1/70, E04G 23/00

(54) **Kompressenputz zum Schadsalzaustrag aus Mauerwerken und Verfahren zur Herstellung**

(30) Priorität: 09.07.2002 DE 10230749
(71) Anmelder: Bauhaus Universität Weimar, vertreten durch den Rektor, 99423 Weimar (DE)
(72) Erfinder: Kaps, Christian, 07749 Jena (DE); Terheiden, Kristina, 99084 Erfurt (DE); Wienke, Katja, 06493 Hargerode (DE)
(74) Vertreter: Engel, Christoph Klaus

(57) **Zusammenfassung**

Die Erfindung betrifft einen Kompressenputz zum Schadsalzaustrag aus Mauerwerken, der Bestandteile von zumindest Tonmineralien und Cellulose enthält. Die Erfindung zeichnet sich dadurch aus, dass ein offenporiger Zuschlagstoff in Anteilen >0 - 75 Vol.-% beigegeben wird. Dadurch lassen sich die Transportkennwerte des Kompressenputzes in einem weiten Spektrum einstellen, wobei der Wasseraufnahmekoeffizient auf Werte von µ = 3 bis 7 und die Wasserdampfdiffusionswiderstandszahl auf Werte von w = 1 bis 15 kg/(m² h^{0,5}) eingestellt werden können. Als offenporiger Zuschlagstoff wird vorzugsweise offenporiges Blähglas-Granulat verwendet. Als weitere Zuschlagstoff kann vorzugsweise Sand beigegeben werden.

## Beschreibung

Die vorliegende Erfindung betrifft einen Kompressenputz auf der Grundlage eines Tonmineralien-Cellulose-Zuschlag-Gemisches zur Schadsalzreduzierung in Bauwerken und Bauwerkstoffen.

Bentonit-Cellulose-Sand-Kompressenputze sind bereits bekannt. Für Bentonit-Cellulose-Sand-Kompressenputze werden die einzelnen Komponenten Bentonit, Cellulose und Sand in verschiedenen Mischungsverhältnissen trocken gemischt. Aus "Entsalzung mit Kompressen in der Denkmalpflege", H. Schuh und H. Ettl, Bautenschutz und Bausanierung 15 (1992), S. 86 - 89, ist das Mischungsverhältnis von Bentonit, Cellulose, Sand mit 15 Vol.-%, 15-Vol.-%, 75 Vol.-% bekannt. Mit Bentonit als Bestandteil der Kompresse wird dabei ein Material mit hohem Adsorptionsvermögen für Salzionen verwendet. Durch Magerung mit Sand und Zellulosefasern kann die Härte der getrockneten Kompressen und die Schwundneigung herabgesetzt und auf den entsprechenden Untergrund abgestimmt werden.

Die Verwendung von Blähglas-Granulat als Zuschlagstoff ist in der Baupraxis generell ebenfalls bekannt. In "Salzreduzierung mit verschiedenen Kompressen am Schloss Frankenberg und begleitende rechnerische Untersuchungen", H. Ettl, M. Krus, 12. Hanseatische Sanierungstage Entfeuchten/Entsalzen, Mauerwerksfeuchtigkeit H. 12 (2001), Verlag Bauwesen Berlin wurde die Entsalzung mit einem Kompressenputz mit Poraver und Sand als Zuschlag beschrieben. Die Mischungen weisen zwar große Wasseraufnahmekoeffizienten (w-Werte) auf, besitzen aber gleichzeitig auch große Wasserdampfdiffusionswiderstandszahlen (µ-Werte)

Ähnlichkeiten bezüglich des w-Wertes zeigten auch die Untersuchungen von P., K. Larsen in "Desalination of painted brick vaults", TU Denmark, Phd-Thesis 1998, die für eine Kaolin-Kompresse sogar einen w-Wert von 5-12 kg/(m2h^0,5) besaßen. Dort konnte ein Entsalzungserfolg jedoch nur bis zu wenigen Zentimetern Tiefe gezeigt werden.

Aus der DE 197 06 233 C2 ist eine Wandsanierungsplatte für salzbelastete Mauern bekannt. Diese Wandsanierungsplatte besteht aus einem einstückigen mineralischen Plattenkörper, der eine Porosität von mindestens 80 Vol.-% und eine hohe Kapillaraktivität aufweist. Die von der zu sanierenden Mauer abgewandte Fläche der Platte ist mit einem Hydrophobierungsmittel behandelt. Die Anbringung einer solchen Platte auf unebenen Wandbereichen bereitet jedoch Schwierigkeiten. Außerdem wird der optische Eindruck von häufig historisch bedeutsamen Bauwerken durch die Anbringung solcher Platten erheblich gestört.

Die DE 195 07 041 C2 beschreibt eine Unterputzmatte zur Sanierung von salzverseuchtem Mauerwerk, die aus mehreren Schichten aufgebaut ist. Auf diese Matte muss ein neuer Oberputz aufgetragen werden, so dass ihr Einsatz z.B. im Denkmalbereich häufig ausscheiden muss. Außerdem kommt es nicht zu einem wesentlichen Salzeritzug aus dem Mauerwerk.

Die Aufgabe der vorliegenden Erfindung besteht somit darin, einen Kompressenputz bereit zu stellen, bei welchem es durch geeignete Materialauswahl gelingt, die beiden Transportkennwerte Wasseraufnahmekoeffizient und Wasserdampfdiffusionswiderstandszahl (w-Wert und µ-Wert) separat voneinander zu variieren, um sie an die jeweiligen Randbedingungen des zu sanierenden Bauwerkstoffes optimal anzupassen. Dabei ist es insbesondere Ziel, eine Entsalzung auch bei größeren Mauerwerksdicken bis mindestens 20 cm zu ermöglichen.

Diese Aufgabe kann durch einen Tonmineralien-Cellulose-Kompressenputz realisiert werden, dem ein offenporiger Zuschlagstoff, insbesondere offenporiges Blähglas-Granulat beigegeben wird.

Gemäß einer bevorzugten Ausführungsform werden Tonmineralien mit 10 - 40 Vol.-% zugesetzt. Als Tonmineral eignet sich Bentonit besonders gut. Vorteilhaft ist es, wenn Cellulose mit Faserlängen von 300-700 µm in einem Anteil von >0-20 Vol.-%, eingesetzt wird. Als weiterer Zuschlagstoff kann Sand in Anteilen von vorzugsweise 0 - 75 Vol.-% beigegeben werden, wodurch sich die Transportkennwerte in einem breitern Bereich einstellen lassen.

Als zweckmäßig hat sich der Einsatz von offenporigem Blähglas-Granulat mit Korngrößen von 0,5 - 4 mm und einem Anteil von 0 - 75 Vol.-%, vorzugsweise 60 - 75 Vol.-% erwiesen. Das offenporige Blähglas-Granulat besitzt eine hohe offene Porosität von circa 70 %. Damit ermöglicht das Blähglas-Granulat durch die hohe Porosität bei gleichzeitiger hoher Kapillarität z.B. einen hohen w-Wert bei gleichzeitig niedrigem µ-Wert einzustellen. Somit können diese Werte im breiten Spektrum (µ-Werte 3-7 [-] und w-Werte 1-15 [kg/(m² h^{0,5}]) variiert werden. Insbesondere sind µ-Werte < 7 realisierbar.

Bei abgewandelten Ausführungsformen können auch andere offenporige Zuschlagstoffe, wie z.B. Bims verwendet werden. Dabei kommt es entscheidend auf die Porosität des gewählten Zuschlagstoffes an.

Der Einsatz des offenporigen Zuschlagstoffes, insbesondere des Blähglas-Granulates ermöglicht die Erhöhung der Porosität des Kompressenputzes, welches zu einer Verringerung des Eigengewichtes führt und somit größere Auftragstärken ermöglicht. Der zusätzlich entstehende Porenraum kann dabei die Kapillarwirksamkeit des Kompressenputzes erhöhen und ebenso zusätzlichen Porenraum für Salzkristallisation schaffen.

Durch die breite Spanne der Variation der offenen Porosität des Kompressenputzes und des kapillarwirksamen Porenraumes ist die weitgehend unabhängige Einstellung des w-Wertes und des µ-Wertes möglich. Durch die übrigen Komponenten kann dieses Verhalten verstärkt oder verringert werden. Die unabhängige Einstellung des w-Wertes und des µ-Wertes des Kompressenputzes ermöglicht eine tiefenwirksame Schadsalzreduzierung. Bei der Applikation des erfindungsgemäßen Kompressenputzes auf dem salzbelasteten Untergrund kann beispielsweise ein Austrag des Schadsalzes bis zu 80% auf einer Tiefe von 20 cm aus Sandstein mit einem abtrocknenden Kompressenputz in 14 Tagen erfolgen.

Für die Herstellung des Kompressenputzes müssen die Fasern erst mit den Zuschlagstoffen, also z.B. Sand und Blähglas-Granulat gut durchmischt werden. Erst danach werden die Tonmineralien zugegeben und ebenfalls gut durchmischt um eine homogene Eigenschaft des Putzes zu bewirken. Der Trockenmischung wird dann 30 - 120 M-% deionisiertes Wasser zugesetzt.

Die Erfindung wird nachfolgend anhand von Beispielen beschrieben, welche die große Bandbreite der möglichen Mischungsverhältnisse und die Möglichkeiten der Einstellung der Transportkennwerte aufzeigen. Da in den oben angegebenen Grenzen aber auch andere Zusammensetzungen gewählt werden können, sollen die Beispiele nicht beschränkend verstanden werden.

Als Komponenten werden Tonmineralien, Cellulose, offenporiges Blähglas-Granulat und teilweise Sand verwendet. Die Komponenten werden in der jeweils angegebenen volumenanteilmäßigen Zusammensetzung und Reihenfolge miteinander gemischt, wobei durch abschließende Beigabe von Wasser eine Mörtelmischung hergestellt wird. Die angegebenen Werte des Wasserdampfdiffusionswiderstandes µ nach DIN 52516 und des Wasseraufnahmekoeffizienten w nach DIN 52417 wurden an trockenen Probekörpern bestimmt.

### Beispiel 1

Es wurde eine Mischung aus folgenden Komponenten hergestellt:
- 45 Vol.-% Sand,
- 5 Vol.-% Blähglas-Granulat,
- 25 Vol-% Cellulose,
- 25 Vol-% Bentonit.

Diese Komponenten wurden zusammengegeben und innig durchmischt. Für diese Mischung ergaben sich die folgenden Koeffizienten:
- µ-Wert: 7,1 [-],
- w-Wert: 1,2 [kg/(m² h^{0,5}) ]

### Beispiel 2

Es wurde eine Mischung aus folgenden Komponenten hergestellt:
- 62,5 Vol.-% Blähglas-Granulat,
- 12,5 Vol-% Cellulose,
- 25 Vol-% Bentonit

Diese Komponenten wurden zusammengegeben und innig durchmischt. Für diese Mischung ergaben sich die folgenden Koeffizienten:
- µ-Wert: 5 [-],
- w-Wert: 4,2 [kg/(m2 h^{0,5}) ] .

### Beispiel 3

Es wurde eine Mischung aus folgenden Komponenten hergestellt:
- 75 Vol.-% Blähglas-Granulat,
- 12,5 Vol-% Cellulose,
- 12,5 Vol-% Bentonit

Diese Komponenten wurden zusammengegeben und innig durchmischt. Für diese Mischung ergaben sich die folgenden Koeffizienten:
- µ-Wert: 3 [-],
- w-Wert: 3 [kg/(m² h^{0,5}) ] .

## Patentansprüche

1. Kompressenputz zum Schadsalzaustrag aus Mauerwerken, der Bestandteile von zumindest Tonmineralien und Cellulose enthält, **dadurch gekennzeichnet, dass** er weiterhin einen offenporigen Zuschlagstoff in Anteilen >0 - 75 Vol.-% enthält.

2. Kompressenputz nach Anspruch 1, **dadurch gekennzeichnet, dass** als offenporiger Zuschlagstoff offenporiges Blähglas-Granulat oder Bims verwendet wird.

3. Kompressenputz nach Anspruch 1 oder 2, **dadurch gekennzeichnet, dass** er als weiteren Zuschlagstoff Sand enthält.

4. Kompressenputz nach einem der Ansprüche 1 bis 3, **dadurch gekennzeichnet, dass** er als Tonmineral 10 - 40 Vol.-% Bentonit, sowie >10 - 25 Vol.-% Cellulose mit Faserlängen von 300-700 µm, >0 - 50 Vol.-% Sand und 5 - 75 Vol.-% offenporiges Blähglas-Granulat enthält.

5. Kompressenputz nach einem der Ansprüche 2 bis 4, **dadurch gekennzeichnet, dass** das Blähglas-Granulat Korngrößen von 0,5 bis 4 mm aufweist.

6. Kompressenputz nach einem der Ansprüche 2 bis 5, **dadurch gekennzeichnet, dass** der Anteil an Blähglas-Granulat 60 - 75 Vol.-% beträgt.

7. Kompressenputz nach einem der Ansprüche 1 bis 6, **dadurch gekennzeichnet, dass** die mengenmäßige Zusammensetzung so gewählt wird, dass im trockenen Zustand die Wasserdampfdiffusionswiderstandszahl auf einen Wert von µ = 3 bis 7 und der Wasseraufnahmekoeffizient auf einen Wert von w = 1 bis 15 kg/(m² h^{0,5}) eingestellt sind.

8. Verfahren zur Herstellung eines Kompressenputzes gemäß einem der Ansprüche 1 bis 7, **gekennzeichnet durch** die folgenden Schritte:
- Vermischen von Cellulosefasern mit einem offenporigem Zuschlagstoff, insbesondere Blähglas-Granulat, und ggf. weiteren Zuschlagstoffen, insbesondere Sand;
- Zugabe von Tonmineralien zu dem erzeugten Gemisch;
- weiteres Vermischen, bis eine homogene Trockenmischung vorliegt;
- Zusatz von 30 - 120 M-% Wasser zu der Trockenmischung, um eine verarbeitbare Mörtelmischung bereit zu stellen.

9. Verfahren nach Anspruch 8, **dadurch gekennzeichnet, dass** der Trockenmischung deionisiertes Wasser zugesetzt wird.
